# EUROPEAN PATENT SPECIFICATION

(11) **EP 1 716 695 B1**
(45) Date of publication and mention of the grant of the patent: **23.01.2008**
(21) Application number: 05704806.8
(22) Date of filing: 07.02.2005
(51) Int. Cl.: H04M 1/67

(54) **METHOD TO INPUT AN IDENTIFICATION CODE**
VERFAHREN ZUR EINGABE EINES IDENTIFIKATIONSCODES
PROCEDE D'INTRODUCTION DE CODE D'IDENTIFICATION

(30) Priority: 09.02.2004 SE 0400289
(43) Date of publication of application: 02.11.2006
(73) Proprietor: VOLVO LASTVAGNAR AB, 405 08 Göteborg (SE)
(72) Inventor: BRANDT, Per-Olov, S-428 37 Kallered (SE); BERGLIN, Stefan, S-433 60 Sävedalen (SE)
(74) Representative: Fröhling, Werner Otto
(86) International application number: PCT/SE2005/000155
(87) International publication number: WO 2005/076584

(56) References cited:
- DE-U1- 20 314 520
- DATABASE WPI Week 200024, Derwent Publications Ltd., London, GB; Class B60, AN 2000-279658, XP002987319 & JP 2000 078279 A (ALPINE KK) 14 March 2000
- DATABASE WPI Week 199905, Derwent Publications Ltd., London, GB; Class B60, AN 1999-052938, XP002987320 & JP 10 304 463 A (DAIHATSU MOTOR CO LTD) 13 November 1998
- DATABASE WPI Week 199942, Derwent Publications Ltd., London, GB; Class H04, AN 1999-500791, XP002987321 & JP 11 215 231 A (MURATA KIKAI KK) 06 August 1999
- DATABASE WPI Week 200370, Derwent Publications Ltd., London, GB; Class HO4, AN 2003-737724, XP002987322 & JP 2003 244773 A (NIPPODENSO CO LTD) 29 August 2003
- DATABASE WPI Week 200348, Derwent Publications Ltd., London, GB; Class H04, AN 2003-509157, XP002987323 & JP 2003 101639 A (KOKUSAI DENKI KK) 04 April 2003

## Description

### TECHNICAL FIELD:

The present invention relates to a method to input an identification code in an apparatus. The invention is preferably utilized when an identification code needs to be entered on repeated occasions.

### BACKGROUND ART:

In modern vehicles there are many different electrical apparatuses. Most of these apparatuses are permanently integrated in the vehicle, but there are a number of apparatuses that are also removable. Examples of such apparatuses are, for example, a radio, telephone or telephone subscription card (SIM-card). There can be several reasons for the apparatuses being removable. One reason can be to prevent theft of the apparatus, by removing the apparatus when the vehicle is not being used. Another reason can be that the apparatus can also be used outside the vehicle, for example a mobile phone. Yet another reason can be that the apparatus can be used in several different vehicles, so that the apparatus is moved from one vehicle to another.

In order to avoid having to carry around, for example, a large and bulky radio, radio apparatuses are available with antitheft devices in the form of various code functions. If the radio apparatus is disconnected from its power supply, for example in the event of theft, a security code is activated that prevents the radio apparatus from being used unless the code is entered into the radio apparatus. The code is not activated, however, when the vehicle is switched off, as a special input on the radio apparatus is connected to the battery even when the ignition is switched off.

This is not possible for a mobile phone that is used in a vehicle. Instead, it is possible to activate an identification code (PIN-code) when the phone is switched off that makes it impossible to use the phone unless the phone's identification code is entered when the phone is switched on again. The phone is then in a security mode with an electronic lock that can be unlocked using the identification code. In the following, the phone's identification code is called a phone code. In order for this activation of the phone code to take place, the phone must be switched off manually. If the phone is mounted in a docking station and the power to the phone is interrupted, the phone is normally not switched off, but instead the phone's internal battery supplies the phone with power.

In a similar way, it is possible to activate an identification code when the phone is switched off, which makes it impossible to use the SIM-card in the phone unless the identification code for the SIM-card is entered when the phone is switched on again. In the following, the SIM-card's identification code is called a card code. In order for this activation of the card code to take place, the phone must be switched off manually. If the phone is mounted in a docking station and the power to the phone is interrupted, the phone is normally not switched off, but instead the phone's internal battery supplies the phone with power.

When the phone is integrated in the vehicle, however, an identification code can be activated when the ignition is switched off. This identification code can be a phone code and/or a card code. As the phone is integrated in the vehicle's electrical system and, in addition, is built in, the risk of theft is small. It is most usual therefore for an identification code that protects the SIM-card to be activated, so that the SIM-card cannot be used in the event of theft of the card. When a driver has an integrated phone in the vehicle and leaves the vehicle, the phone's voltage supply is deactivated when the ignition is switched off, that is the phone's SIM-card is put in a security mode and requires the card code to be entered when the vehicle is restarted in order to unlock the electronic lock. This can, of course, be extremely annoying for the driver, particularly for a driver who, for example, drives a delivery vehicle that needs to stop frequently.

For a mobile phone that can be switched off externally, the securest method, as far as theft is concerned, is to activate both the phone code and card code. This means that the driver must enter two identification codes each time the vehicle is started.

One way of avoiding having to enter an identification code each time the phone is switched on is to deactivate the PIN-code function, that is to set the phone so that it does not require an identification code to be entered when the phone is switched on. The disadvantage of this, in the case of an integrated phone, is that the SIM-card is not protected, for example in the event of theft. In the case of a mobile phone, both the phone and the SIM-card are unprotected. It is also the case that certain operators do not allow the PIN-code function to be deactivated.

DE 20314520 U describes an access control for a car mobile phone in which the PIN code for the mobile phone is stored in the car and transferred to the mobile phone only when the car is started with the right key.

### DISCLOSURE OF INVENTION:

The object of the invention is therefore to provide a method to input an identification code in a unit where the inputting of the identification code is carried out automatically in a simple and secure way.

The solution to this problem according to the invention is described in the characterizing part of claim 1. The other claims contain advantageous embodiments and further developments of the method according to the invention.

The method according to the invention for transferring an identification code from a first unit to a second unit in a vehicle is carried out by the steps of storing a plurality of identification codes in the first unit, of checking a user's identity on a predetermined occasion, which user's identity can correspond to one of a plurality of predefined user identities with each user identity being associated with at least one of the said identification codes, and by the step of transferring the identification code that is associated with the user from the first unit to the second unit when the user's identity matches a predefined identity. The advantage of this method is that it is possible to input an identification code in a unit automatically in a simple and secure way.

In an advantageous further development of the method according to the invention, the user's identity is checked upon activation of the first and/or second unit. The advantage of this is that the identification of a user can be combined with the starting procedure for the vehicle.

In another advantageous further development of the method according to the invention, the user's identity is checked by the first unit. The advantage of this is that the identification of a user can be linked with existing user identification.

In yet another advantageous further development of the method according to the invention, the identification code is transferred together with a second identification code. The advantage of this is that several different identification codes can be transferred to a unit, for example to activate different subsystems in the unit.

### BRIEF DESCRIPTION OF DRAWINGS

The invention will be described in greater detail in the following, with reference to embodiments that are illustrated in the attached drawing, which shows a flow chart illustrating the method according to the invention.

### MODE(S) FOR CARRYING OUT THE INVENTION

The embodiments of the invention and further developments described in the following are only to be regarded as examples and are in no way to limit the protection provided by the patent claims.

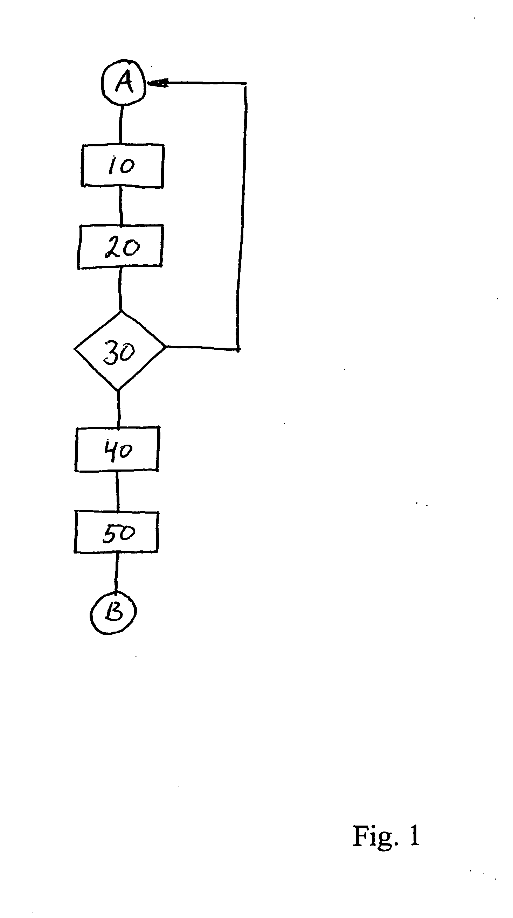

In a first embodiment of the method according to the invention to input an identification code in a unit, a telephone integrated in a vehicle is used to exemplify the method. The phone has a removable SIM-card. It should, however, be understood that the method can also be used for other types of arrangement in which an identification code needs to be input in an apparatus that has been deactivated. A flow chart that describes the method is shown in Figure 1.

A corresponds to a stand-by mode that applies before the vehicle is started. The stand-by mode can be active, that is a control unit can be activated and be in a stand-by mode. In step 10, the vehicle is provided with voltage by means of the ignition key. In conjunction with this, various subsystems in the vehicle are provided with voltage and also the integrated telephone. If the identification code is activated, the phone will be in a security mode. The integrated phone is connected to the vehicle's power supply, to an external antenna and to a control unit. The phone can also be connected to the vehicle's control system via a data bus.

In step 20, the vehicle's control units are activated. The identification of the driver starts at this point, by a control unit requesting the driver's identity. This identification can be carried out in a number of ways, for example by reading a code in the key, by a special identification card, by fingerprints, etc.

These identification methods are known to the person skilled in the art and will not be described in greater detail. In this example, a key with an integrated code is used as the means of identification.

In step 30, the identity of the driver, that is the key's code, is compared with a stored code. When these codes match, that is when the driver is using an approved key, the driver is considered to have been identified. In the event of a positive identification, the process continues with step 40.

In step 40, the control unit is informed that the driver has been positively identified. The control unit then sends a stored identification code to the phone. This code is the card code that is required to unlock the phone's SIM-card. The card code is stored in the control unit in a suitable way. The simplest way is for the phone to send the card code to the control unit in a special programming mode. It is also possible to program the card code into the control unit via a menu system.

When the telephone has received the card code from the control unit and the SIM-card has been unlocked, the phone is in a user mode in which the driver can make calls and the method continues to B and normal operation of the vehicle continues.

If the comparison in step 30 is negative, that is if the driver has not been identified, for example by the use of an incorrect key, steps 40 and 50 will not be carried out. The process can then either jump directly to B or return to A. This can depend on, for example, which type of identification of the driver has been used and how the vehicle's system handles the identification of a driver.

In the event of a negative identification, the whole starting sequence can, for example, be simultaneously interrupted so that the method returns to A. This is advantageous, for example, when the control unit in which the card code is stored is a so-called immobilizer. As an immobilizer does not allow the vehicle to be started by incorrect keys, but interrupts the starting sequence, it is also the case that no card code will be sent from the immobilizer to the phone.

In a further development of the method according to the invention, one of a plurality of different codes can be sent from the control unit. This is advantageous when several different drivers use the vehicle. For example, each driver can have his own SIM-card for the built-in phone. When a driver has been identified in step 30, the control unit is informed in step 40, both that the driver has been positively identified and of the identity of the driver. The control unit then sends to the phone the identification code that is associated with the identified driver. This code is the card code that is required to unlock the phone's SIM-card. Identification of the driver can, for example, be carried out by different drivers having different identification cards or keys with different codes. This can also be used in combination with removable mobile phones, where several drivers use the same vehicle. Yet another possibility is that the phone can have several accounts associated with the same SIM-card. By means of the method according to the invention, each driver can be associated with his own account with the telecommunications operator without needing to input a special code each time the vehicle is started.

In a further development of the method according to the invention, a plurality of different identification codes can be sent from the control unit on the same occasion. This is advantageous when an apparatus requires several identification codes in order to be unlocked. For example, a mobile phone that can be switched off externally can require both a phone code and a card code in order to be unlocked. When a driver has been identified, first one and then the other identification code is sent to the apparatus, for example the phone code is sent first, followed by the card code.

The invention is not to be regarded as being limited to the embodiments described above, a number of additional variants and modifications being possible within the framework of the following patent claims. The method is, for example, also suitable for activating apparatuses that are connected together in a permanent installation in, for example, vehicles or vessels.

## Claims

1. A method for transferring an identification code from a first unit to a second unit in a vehicle, where the identification code is adapted to unlock an electronic security function in the second unit, comprising the steps:
- of storing a plurality of identification codes in the first unit,
- of checking a user's identity on a predetermined occasion, which user's identity can correspond to one of a plurality of predefined user identities with each user identity being associated with at least one of the said identification codes, and
- of transferring the identification code that is associated with the user from the first unit to the second unit when the user's identity matches a predefined identity.

2. The method as claimed in claim 1, **characterized in that** the second unit is in a security mode when it is activated.

3. The method as claimed in any one of claims 1 or 2, **characterized in that** the user's identity is checked upon activation of the first and/or second unit.

4. The method as claimed in any one of claims 1 to 3, **characterized in that** the user's identity is checked by the first unit.

5. The method as claimed in any one of claims 1 to 4, **characterized in that** the identification code is transferred together with a second identification code.

6. The method as claimed in any one of claims 1 to 5, **characterized in that** the first unit is an existing control unit in the vehicle.

7. The method as claimed in any one of claims 1 to 6, **characterized in that** the second unit is a telephone and/or a SIM-card for a telephone.

8. The method as claimed in claim 7, **characterized in that** the identification code is transferred in order to unlock a user-specific SIM-card in the telephone.

9. The method as claimed in claim 7, **characterized in that** the identification code is transferred in order to associate the user with his own account, which account is one of a plurality of accounts associated with the same SIM-card.

10. A computer program comprising program code for carrying out all the steps in any one of claims 1 to 9, when said program is executed by a computer.

11. A computer program product comprising program code, stored on a computer-readable medium, for carrying out the method in any one of claims 1 to 9, when said program is executed by a computer.

## Patentansprüche

1. Verfahren zur Übertragung eines Identifikationscodes von einer ersten Einheit zu einer zweiten Einheit in einem Fahrzeug, wobei der Identifikationscode dazu geeignet ist, eine elektronische Sicherheitsfunktion in der zweiten Einheit zu entsperren, mit den Schritten:
- Speichern einer Vielzahl von Identifikationscodes in der ersten Einheit,
- Überprüfen einer Nutzeridentität bei einem vorher bestimmten Ereignis, wobei die Nutzeridentität einer einer Vielzahl von vorher bestimmten Nutzeridentitäten entsprechen kann, wobei jede Nutzeridentität wenigstens einem der Identifikationscodes zugeordnet ist, und
- Übertragen des Identifikationscodes, der dem Nutzer zugeordnet ist, von der ersten Einheit zu der zweiten Einheit, wenn die Nutzeridentität mit der vorher bestimmten Identität übereinstimmt.

2. Verfahren nach Anspruch 1, **dadurch gekennzeichnet, dass** die zweite Einheit sich in einem Sicherheitsmodus befindet, wenn sie aktiviert wird.

3. Verfahren nach einem der Ansprüche 1 oder 2, **dadurch gekennzeichnet, dass** die Nutzeridentität bei Aktivierung der ersten und/oder der zweiten Einheit überprüft wird.

4. Verfahren nach einem der Ansprüche 1 bis 3, **dadurch gekennzeichnet, dass** die Nutzeridentität durch die erste Einheit geprüft wird.

5. Verfahren nach einem der Ansprüche 1 bis 4, **dadurch gekennzeichnet, dass** der Identifikationscode zusammen mit einem zweiten Identifikationscode übertragen wird.

6. Verfahren nach einem der Ansprüche 1 bis 5, **dadurch gekennzeichnet, dass** die erste Einheit eine existierende Steuereinheit in dem Fahrzeug ist.

7. Verfahren nach einem der Ansprüche 1 bis 6, **dadurch gekennzeichnet, dass** die zweite Einheit ein Telefon und/oder eine SIM-Karte für ein Telefon ist.

8. Verfahren nach Anspruch 7, **dadurch gekennzeichnet, dass** der Identifikationscode übertragen wird, um eine nutzerspezifische SIM-Karte in dem Telefon zu entsperren.

9. Verfahren nach Anspruch 7, **dadurch gekennzeichnet, dass** der Identifikationscode übertragen wird, um den Nutzer seinem eigenen Konto zuzuordnen, wobei das Konto eines einer Vielzahl von Konten ist, die der gleichen SIM-Karte zugeordnet sind.

10. Computerprogramm mit einem Programmcode zur Durchführung aller Schritte in einem der Ansprüche 1 bis 9, wenn das Programm durch einen Computer ausgeführt wird.

11. Computerprogrammerzeugnis mit einem Programmcode, der auf einem computerlesbaren Medium gespeichert ist, zur Ausführung des Verfahrens in einem der Ansprüche 1 bis 9, wenn das Programm durch einen Computer ausgeführt wird.

## Revendications

1. Procédé pour transférer un code d'identification d'une première unité à une seconde unité dans un véhicule, où le code d'identification est adapté pour déverrouiller une fonction de sécurité électronique dans la seconde unité, comportant les étapes consistant à :
- mémoriser une pluralité de codes d'identification dans la première unité,
- contrôler l'identité d'un utilisateur lors d'une occasion prédéterminée, laquelle identité de l'utilisateur peut correspondre à une identité parmi une pluralité d'identités d'utilisateurs prédéfinies, chaque identité d'utilisateur étant associée à au moins l'un desdits codes d'identification, et
- transférer le code d'identification qui est associé à l'utilisateur depuis la première unité vers la seconde unité lorsque l'identité de l'utilisateur correspond à une identité prédéfinie.

2. Procédé selon la revendication 1, **caractérisé en ce que** la seconde unité est dans un mode de sécurité lorsqu'elle est activée.

3. Procédé selon l'une quelconque des revendications 1 ou 2, **caractérisé en ce que** l'identité d'utilisateur est contrôlée lors de l'activation de la première et/ou seconde unité.

4. Procédé selon l'une quelconque des revendications 1 à 3, **caractérisé en ce que** l'identité d'utilisateur est contrôlée par la première unité.

5. Procédé selon l'une quelconque des revendications 1 à 4, **caractérisé en ce que** le code d'identification est transféré conjointement avec un second code d'identification.

6. Procédé selon l'une quelconque des revendications 1 à 5, **caractérisé en ce que** la première unité est une unité de commande existante dans le véhicule.

7. Procédé selon l'une quelconque des revendications 1 à 6, **caractérisé en ce que** la seconde unité est un téléphone et/ou une carte SIM destinée à un téléphone.

8. Procédé selon la revendication 7, **caractérisé en ce que** le code d'identification est transféré afin de déverrouiller une carte SIM spécifique à un utilisateur dans le téléphone.

9. Procédé selon la revendication 7, **caractérisé en ce que** le code d'identification est transféré afin d'associer l'utilisateur à son propre compte, lequel compte est un compte parmi une pluralité de comptes associés à la même carte SIM.

10. Programme informatique comportant un code de programme pour exécuter toutes les étapes selon l'une quelconque des revendications 1 à 9, lorsque ledit programme est exécuté par un ordinateur.

11. Produit de programme informatique comportant du code de programme, mémorisé sur un support lisible par ordinateur, pour mettre en oeuvre le procédé selon l'une quelconque des revendications 1 à 9, lorsque ledit programme est exécuté par un ordinateur.
